# EUROPÄISCHE PATENTANMELDUNG

(11) **EP 4 696 442 A1**
(43) Veröffentlichungstag der Anmeldung: **18.02.2026**
(21) Anmeldenummer: 25191471.9
(22) Anmeldetag: 24.07.2025
(51) Int. Cl.: B23F 23/12, B23F 17/00, G01B 5/20, G01B 21/04, B24B 49/02

(54) **VERFAHREN ZUM KALIBRIEREN EINER VERZAHNMASCHINE, VERZAHNMASCHINE UND SOFTWAREPROGRAMM**

(30) Priorität: 06.08.2024 DE 102024122379
(71) Anmelder: Liebherr-Verzahntechnik GmbH, 87437 Kempten (DE)
(72) Erfinder: GEISER, Hansjörg, 87437 Kempten (DE); VAN HAUTH, Johannes, 87437 Kempten (DE)
(74) Vertreter: Lorenz Seidler Gossel Part. mbB

(57) **Zusammenfassung**

Verfahren zum Kalibrieren einer Verzahnmaschine, welche eine um eine erste Drehachse (C1) drehbare Werkstückaufnahme (11), einen Bearbeitungskopf (13) mit einer Werkzeugaufnahme (12), und einen Sensor (14) zum Vermessen eines in der Werkstückaufnahme der Verzahnmaschine aufgenommenen Werkstücks aufweist, wobei der Sensor an dem Bearbeitungskopf der Verzahnmaschine angeordnet ist, wobei der Bearbeitungskopf über eine erste lineare Bewegungsachse (Z) der Verzahnmaschine relativ zur Werkstückaufnahme in Werkstückbreitenrichtung verfahrbar ist, wobei das Verfahren folgende Schritte umfasst:
- Ermitteln mindestens eines ersten Kalibrierwerts durch Vermessen des Werkstücks an einer ersten Werkstückbreitenposition (z₁),
- Ermitteln mindestens eines zweiten Kalibrierwerts durch Vermessen des Werkstücks an einer zweiten Werkstückbreitenposition (z₂), und
- Bestimmen mindestens eines dritten Kalibrierwertes für die relative Ausrichtung der ersten linearen Bewegungsachse (Z) des Bearbeitungskopfes zur ersten Drehachse (C1) der Werkstückaufnahme aus dem mindestens einen ersten und dem mindestens einen zweiten Kalibrierwert.

## Beschreibung

Die vorliegende Erfindung betrifft ein Verfahren zum Kalibrieren einer Verzahnmaschine durch Vermessen eines in der Werkstückaufnahme der Verzahnmaschine aufgenommenen Werkstücks.

Bei Verzahnmaschinen, bei denen ein Sensor, insbesondere in Form eines Messtasters eingebaut ist, um die hergestellten Werkstücke in der Maschine prüfen zu können, (z.B.: Zahndickenprüfung, Teilungsprüfung, Profilprüfung, Flankenlinienprüfung) kann es durch äußere Einflüsse wie Temperaturschwankungen zu minimalen Verformungen in der Maschine kommen, die diese Prüfungen unpräzise werden lassen. Die daraus resultierenden Änderungen der Position des Sensors relativ zur Verzahnung müssen deshalb regelmäßig ermittelt und durch Kalibrierung ausgeglichen werden, um gleichbleibend gute Prüfergebnisse gewährleisten zu können.

Die zur Kalibrierung notwendige Ermittlung der Position des Sensors kann an einem Messobjekt wie bspw. einem Messblock durchgeführt werden. Die Ermittlung direkt an einem in der Maschine eingespannten Werkstück, insbesondere einem Zahnrad, ist allerdings mit Vorteilen verbunden. Insbesondere entfällt der Aufwand für den Werker, einen Messblock (Kalibrierkugel / Kalibriernormal) in die Maschine einzubringen und nach der Kalibrierung wieder zu entfernen. Bei Verzahnmaschinen zum Fertigen großer Werkstücke kann es auch möglich sein, dass die Verfahrwege für den Messtaster nicht ausreichen, um einen Messblock erreichen zu können. Auch dies wird durch eine Messung am Werkstück vermieden.

Aus Druckschrift EP 2 554 938 B1 ist ein Verfahren zur Kalibrierung eines Messtasters in einer Verzahnmaschine unter Zuhilfenahme eines Werkstücks bekannt, bei welchem das Profil des Werkstücks zweimal durch unterschiedliche Messschritte bestimmt wird. Bei dem ersten Messschritt wird der Messtaster in eine tangentiale Richtung verfahren, während das Werkstück gedreht wird, bei dem zweiten Messschritt dagegen in eine nicht-tangentiale Richtung, bspw. radial. Anhand einer Differenz zwischen den jeweiligen Messschritten bestimmten Zahnprofilgradientenfehlern wird ein Positionsfehler des Messkopfes ermittelt und zur Kalibrierung herangezogen.

Aus Druckschrift DE 10 2019 104 891 A1 ist ein Verfahren zur Kalibrierung eines Messtasters in einer Verzahnmaschine unter Zuhilfenahme eines Werkstücks bekannt, bei welchem sich der Mittelpunkt der Messtasterspitze (ggf. bis auf die gemessenen Abweichungen) auf einer Kreisbahn bewegt.

Beide Verfahren dienen der Kalibrierung einer X-Achse und einer V/Y-Achse, über welche der Messtaster in einer Ebene senkrecht zur Drehachse C1 der Werkstückaufnahme verfahrbar ist und damit der Kalibrierung der Position dieser Achsen relativ zur Drehachse C1 der Werkstückaufnahme.

Weiterhin ist es aus dem Stand der Technik bekannt, Aufspannfehler eines Werkstücks zu ermitteln und ggf. zu beheben. In diesen Verfahren wird jedoch davon ausgegangen, dass die Achsen der Verzahnmaschine zueinander bereits kalibriert sind.

Druckschrift EP 1 319 457 A2 zeigt hierbei ein Verfahren zum spanenden Bearbeiten von Zahnrädern, bei dem das Werkstück nicht exakt auf der Bearbeitungsmaschine ausgerichtet ist, bei dem also die Radführungsachse, die später im Getriebe Drehachse werden soll, nicht mit der Drehachse auf der Bearbeitungsmaschine zusammenfällt und demzufolge bei drehendem Tisch bzw. drehender Werkstückspindel die Radführungsachse F um die Drehachse D taumelt. Hierbei wird die Lage der Radführungsachse F zur Drehachse D der Bearbeitungsmaschine bestimmt, indem entsprechende Bünde auf dem Werkstück angetastet werden, und die nicht exakte Ausrichtung des Werkstücks bei der Bearbeitung durch Zusatzbewegungen der Achsen ausgeglichen, so dass die Verzahnung um die Radführungsachse F erzeugt wird. Ein vergleichbares Verfahren ist auch aus EP 2 596 892 B1, DE 37 12 454 A1 und DE 196 31 620 A1 bekannt.

Druckschrift EP 1 952 927 A1 zeigt ein Verfahren, bei welchem eine fehlerhafte Aufspannung des Werkstücks durch eine an der Werkstückaufnahme vorgesehene Verstelleinrichtung korrigiert wird.

Gemäß der Druckschrift EP 3 274 776 B1 soll eine temperaturbedingte Veränderung einer charakteristischen Werkstückgröße wie bspw. die Zahnweite durch eine Korrektur der Zustellung kompensiert werden.

Aufgabe der vorliegenden Erfindung ist es, ein verbessertes Verfahren zum Kalibrieren einer Verzahnmaschine zur Verfügung zu stellen.

Diese Aufgabe wird durch eine Verfahren gemäß Anspruch 1 gelöst. Bevorzugte Ausgestaltungen der vorliegenden Erfindung sind Gegenstand der Unteransprüche.

Die vorliegende Erfindung umfasst ein Verfahren zum Kalibrieren einer Verzahnmaschine, welche eine um eine erste Drehachse C1 drehbare Werkstückaufnahme, einen Bearbeitungskopf mit einer Werkzeugaufnahme, und einen Sensor zum Vermessen eines in der Werkstückaufnahme der Verzahnmaschine aufgenommenen Werkstücks aufweist, wobei der Sensor an dem Bearbeitungskopf der Verzahnmaschine angeordnet ist, wobei der Bearbeitungskopf über eine erste lineare Bewegungsachse Z der Verzahnmaschine relativ zur Werkstückaufnahme in Werkstückbreitenrichtung verfahrbar ist, wobei das Verfahren folgende Schritte umfasst:
- Ermitteln mindestens eines ersten Kalibrierwerts durch Vermessen einer Verzahnung des Werkstücks an einer ersten Werkstückbreitenposition,
- Ermitteln mindestens eines zweiten Kalibrierwerts durch Vermessen einer Verzahnung des Werkstücks an einer zweiten Werkstückbreitenposition, und
- Bestimmen mindestens eines dritten Kalibrierwertes für die relative Ausrichtung der ersten linearen Bewegungsachse Z des Bearbeitungskopfes zur ersten Drehachse C1 der Werkstückaufnahme aus dem mindestens einen ersten und dem mindestens einen zweiten Kalibrierwert.

Die Erfinder der vorliegenden Erfindung haben hierbei erkannt, dass durch die Ermittlung von Kalibrierwerten an zwei unterschiedlichen Werkstückbreitenpositionen auch eine Kalibrierung der relativen Ausrichtung der ersten linearen Bewegungsachse Z des Bearbeitungskopfes zur ersten Drehachse C1 der Werkstückaufnahme möglich wird, wobei insbesondere eine Abweichung der beiden Achsen von einer gewünschten parallelen Ausrichtung erfasst werden kann. Insbesondere beschreibt der mindestens eine dritte Kalibrierwert daher eine Abweichung der beiden Achsen von einer gewünschten parallelen Ausrichtung und/oder erlaubt die Korrektur einer solchen Abweichung.

Bevorzugte Ausgestaltungen des erfindungsgemäßen Verfahrens werden im folgenden beschrieben.

Gemäß einer möglichen Ausgestaltung erfolgt die Ermittlung des ersten und des zweiten Kalibrierwerts durch Vermessen der gleichen Verzahnung an der ersten und der zweiten Werkstückbreitenposition. Alternativ kann die Ermittlung des ersten und des zweiten Kalibrierwerts jedoch auch durch Vermessen einer ersten und einer zweiten Verzahnung des Werkstücks erfolgen. Wenn im Folgenden hierbei auf eine Verzahnung Bezug genommen wird, schließt dies auch immer die Möglichkeit ein, dass zwei unterschiedliche Verzahnungen vermessen werden.

Gemäß einer möglichen Ausgestaltung weist die Verzahnmaschine mindestens eine zweite Linearachse X1 und/oder eine dritte Linearachse V1/Y1 zum Verfahren des Bearbeitungskopfes relativ zur Werkstückaufnahme auf, wobei der mindestens eine erste Kalibrierwert und der mindestens eine zweite Kalibrierwert jeweils eine Kalibrierung der Position der zweiten Linearachse X1 und/oder der dritten Linearachse V1/Y1 relativ zur ersten Drehachse C1 betreffen. Insbesondere beschreiben die ersten und zweiten Kalibrierwerte hierbei jeweils die Position des Bearbeitungskopfes in einer Ebene senkrecht zur ersten Drehachse C1 der Werkstückaufnahme.

Gemäß einer möglichen Ausgestaltung erfolgt das Ermitteln der Kalibrierwerte jeweils durch Vermessen einer auf der Verzahnmaschine in der gleichen Aufspannung erzeugten Verzahnung des Werkstücks. Durch das Vermessen einer auf der Verzahnmaschine erzeugten Verzahnung ist sichergestellt, dass die vermessene Kontur nicht durch Aufspannfehler des Werkstücks in der Werkstückaufnahme beeinflusst ist, sondern die Drehachse der Kontur des Werkstücks mit der Drehachse Werkstückaufnahme übereinstimmt.

Gemäß einer alternativen Ausgestaltung liegt die Verzahnung dagegen bereits vor dem Aufspannen des Werkstücks in der Verzahnmaschine vor und es erfolgt vor dem Vermessen der Verzahnung keine Bearbeitung der Verzahnung auf der Verzahnmaschine.

Aufspannfehler des Werkstücks in der Werkstückaufnahme können hierbei zwar nicht ausgeschlossen werden. Hierdurch kann bei der Vermessung der Berührpunkt etwas weiter innen oder außen auf der Evovlente liegen als angenommen. Jedenfalls für gewisse Ausgestaltungen der vorliegenden Erfindung hat dies jedoch keinen signifikanten Einfluss auf die Bestimmung der Kalibrierwerte.

Bevorzugt wird die Verzahnung jedoch vor der Vermessung entweder in einer anderen Aufspannung, bspw. auf einer anderen Verzahnmaschine, oder in der gleichen Aufspannung spanend bearbeitet, um eine Oberfläche der Verzahnung bereitzustellen. Insbesondere wird die Verzahnung bevorzugt hart-fein-bearbeitet, insbesondere geschliffen, um zu Vermeiden, dass Vorschubmarkierungen eines vorangegangenen Weichbearbeitungsverfahrens die Kalibrierung negativ beeinflussen.

Gemäß einer möglichen Ausgestaltung erfolgt das Ermitteln des mindestens einen ersten und zweiten Kalibrierwerts jeweils durch Ermitteln mindestens einer über den Sensor bestimmten Relativposition zwischen dem Werkstück und dem Bearbeitungskopf an mindestens einem Messpunkt, wobei das ermittelte Ergebnis mit einer Soll-Relativposition verglichen wird, um daraus einen Korrekturwert zu bestimmen. Insbesondere handelt es sich hierbei um einen Korrekturwert der Position des Bearbeitungskopfes relativ zur Drehachse C1 der Werkstückaufnahme in einer senkrecht zur Drehachse C1 verlaufenden Ebene.

Gemäß einer möglichen Ausgestaltung erfolgt das Ermitteln des mindestens einen ersten Kalibrierwerts und des mindestens einen zweiten Kalibrierwerts, indem das Werkstück für die Vermessung über die Drehachse C1 der Werkstückaufnahme gedreht und der Sensor über mindestens eine Achse der Verzahnmaschine verfahren wird, um die Verzahnung zu vermessen.

Gemäß einer möglichen Ausgestaltung wird der Sensor zur Vermessung des Werkstücks hierbei auf mindestens einer vorgegebenen Bahn bezüglich eines Punktes auf der Werkstückoberfläche geführt. Insbesondere kann die Bahn jedenfalls teilweise durch eine erwartete Bewegung des Punktes auf der Werkstückoberfläche bei einer Drehbewegung des Werkstück um die Drehachse der Werkstückaufnahme C1 vorgegeben sein.

Gemäß einer ersten Variante kann hierbei ein Messpunkt des Sensors in zwei Messdurchläufen entlang zweier unterschiedlicher Bahnen entang der Oberfläche der Verzahnung geführt und der erste bzw. zweite Kalibrierwert aus Abweichungen zwischen den Messergebnissen bestimmt werden. Insbesondere kann hierbei bei dem ersten Messdurchlauf der Sensor in eine tangentiale Richtung verfahren, während das Werkstück gedreht wird, bei dem zweiten Messdurchlauf dagegen in eine nicht-tangentiale Richtung, bspw. radial. Anhand einer Differenz zwischen den bei den jeweiligen Messdurchläufen bestimmten Zahnprofilgradientenfehlern wird ein Positionsfehler des Bearbeitungskopfes ermittelt und Bestimmung des ersten bzw. zweiten Kalibrierwerts herangezogen. Dies kann insbesondere so erfolgen, wie dies in der EP 2 554 938 B1 beschrieben ist.

Gemäß einer zweiten Variante wird der Sensor so verfahren, dass ein Messpunkt auf der Zahnflanke bei perfekter Kalibrierung unverändert bleiben würde, wobei der erste bzw. zweite Kalibrierwert aus Abweichungen zwischen einer bei perfekter Kalibrierung erwarteten Verfahrbewegung des Sensors und/oder eines bei perfekter Kalibrierung erwarteten Sensorwerts und einer tatsächliche Verfahrbewegung des Sensors und/oder einem tatsächlichen Sensorwert in die Bestimmung bestimmt werden. Insbesondere bewegt sich der Bearbeitungskopf mit dem Sensor daher (ggf. bis auf die gemessenen Abweichungen) auf einer Kreisbahn um die Drehachse C1.

Gemäß einer möglichen Ausgestaltung kann als Sensor ein Messtaster eingesetzt werden.

Gemäß eine ersten Ausgestaltung der zweiten Variante erfolgt die Bestimmung des ersten und/oder zweiten Kalibrierwerts jeweils durch folgende Schritte:
- Verfahren von Messtaster und/oder Werkstück in eine Relativposition, in welcher die Messtasterspitze eine Zahnflanke des Werkstücks berührt;
- Drehen des Werkstücks über eine Drehachse der Werkstückaufnahme und Verfahren des Messtasters über die zweite und dritte lineare Bewegungsachsen der Verzahnmaschine so, dass
   - der Berührpunkt der Messtasterspitze auf der Zahnflanke bei perfekter Kalibrierung unverändert bleiben würde und
   - die Auslenkung oder der Betrag der Auslenkung der Messtasterspitze bei perfekter Kalibrierung mindestens einen vorgegebenen Wert einnehmen und/oder beibehalten würde;
- Bestimmen einer Abweichung der Auslenkung der Messtasterspitze von dem mindestens einen vorgegebenen Wert an mindestens einem Messpunkt;
- Bestimmen des mindestens einen ersten bzw. zweiten Kalibrierwerts auf Grundlage der Abweichung.

Gemäß einer zweiten Ausgestaltung der zweiten Variante erfolgt die Bestimmung des ersten und/oder zweiten Kalibrierwerts jeweils durch folgende Schritte:
- Verfahren von Messtaster und/oder Werkstück in eine Relativposition, in welcher die Messtasterspitze die Zahnflanke des Werkstücks berührt;
- Drehen des Werkstücks über eine Drehachse der Werkstückaufnahme und Verfahren des Messtasters über die zweite und dritte lineare Bewegungsachse der Verzahnmaschine so, dass
   - der Berührpunkt der Messtasterspitze auf der Zahnflanke bei perfekter Kalibrierung unverändert bleiben würde, und
   - die Auslenkung oder der Betrag der Auslenkung der Messtasterspitze mindestens einen vorgegebenen Wert einnimmt und/oder beibehält;
- Bestimmen einer Abweichung zwischen der tatsächlichen Stellung der Drehachse der Werkstückaufnahme und/oder der mindestens zwei Bewegungsachsen der Verzahnmaschine von einer Stellung, welche diese bei perfekter Kalibrierung aufweisen würden, an mindestens einem Messpunkt; und
- Bestimmen des mindestens einen ersten bzw. zweiten Kalibrierwerts auf Grundlage der Abweichung.

Insbesondere kann die Bestimmung des ersten und/oder zweiten Kalibrierwerts jeweils durch ein Verfahren erfolgen, wie es in der DE 10 2019 104 891 A1 beschrieben ist.

Auch unabhängig von dem konkret eingesetzten Verfahren zur Bestimmung des ersten und/oder zweiten Kalibrierwerts kann es sich bei dem Sensor um einen Messtaster handeln.

Gemäß einer möglichen Ausgestaltung wird der dritte Kalibrierwert bei einer nachfolgenden Messung und/oder Bearbeitung zur Korrektur der Verfahrkinematik des Bearbeitungskopfes und/oder zur Korrektur der Mess- und/oder Ansteuerwerte herangezogen wird.

Gemäß einer ersten möglichen Ausgestaltung wird daher bei einer nachfolgenden Messung und/oder Bearbeitung beim Verfahren des Bearbeitungskopfes entlang der ersten Linearachse Z abhängig von der Position in Werkstückbreiterichtung die zweite Linearachse X und/oder die dritte Linearachse V/Y in Abhängigkeit von dem dritten Kalibrierwert mitverfahren.

Gemäß einer zweiten möglichen Ausgestaltung wird bei einer nachfolgenden Messung und/oder Bearbeitung ein gemessener und/oder der Ansteuerung zugrunde gelegter Soll-Flankenlinienwinkel in Abhängigkeit von dem dritten Kalibrierwert korrigiert wird, insbesondere über einen vom Kalibierwert abhängigen Offset. Hierdurch lässt sich das Verfahren auch ohne eine Änderung bei der Ansteuerung der Bewegungsachsen der Verzahnmaschine auf einer konventionellen Steuerung implementieren.

Gemäß einer möglichen Ausgestaltung erfolgt die Kalibrierung vor der Durchführung eines Bearbeitungsschritts am Werkstück, zwischen zwei Bearbeitungsschritten an dem Werkstück oder nach der Durchführung eines Bearbeitungsschritts am Werkstück. Insbesondere kann die Korrektur der Bearbeitung anhand des dritten Kalibrierwerts hierbei vor dem letzten Bearbeitungsschritt des Werkstücks vorgenommen werden, insbesondere vor dem letzten Schlichtschnitt, so dass sich Fehler in der Ausrichtung der Drehachse C1 und der ersten Linearachse Z1 nicht auf die Bearbeitungsqualität auswirken..

Gemäß einer möglichen Ausgestaltung erfolgt die Kalibrierung dagegen erst nach der Bearbeitung eines Werkstücks. Die Korrektur kann dann in die Vermessung dieses oder weitere Werkstücke und/oder in die Bearbeitung weiterer Werkstücke eingehen.

Gemäß einer möglichen Ausgestaltung erfolgt die Kalibrierung zur Bestimmung des mindestens einen dritten Kalibrierwerts an drei oder mehr Werkstückbreitenposition. Hierdurch kann die Genauigkeit bei der Bestimmung des mindestens einen dritten Kalibrierwerts erhöht werden. Der mindestens eine dritte Kalibrierwert kann hierbei durch eine Interpolation über die sich aus den drei oder mehr Kalibrierpositionen ergebenden Werte bestimmt werden, oder in Form einer von der Position in Werkzeugbreitenrichtung abhängigen Kalibrierkurve.

Die vorliegende Erfindung umfasst weiterhin eine Verzahnmaschine, welche eine um eine erste Drehachse C1 drehbare Werkstückaufnahme, einen Bearbeitungskopf mit einer Werkzeugaufnahme, und einen Sensor zum Vermessen eines in der Werkstückaufnahme der Verzahnmaschine aufgenommenen Werkstücks aufweist, wobei der Sensor an dem Bearbeitungskopf der Verzahnmaschine angeordnet ist, wobei der Bearbeitungskopf über eine erste lineare Bewegungsachse Z der Verzahnmaschine relativ zur Werkstückaufnahme in Werkstückbreitenrichtung verfahrbar ist, wobei die Verzahnmaschine eine Steuerung aufweist, welche eingerichtet und/oder programmiert ist, ein Verfahren, wie es oben beschrieben ist, auf der Verzahnmaschine durchzuführen. Insbesondere führt die Steuerung die einzelnen Schritte des Verfahrens automatisch durch und/oder weist eine Bedienerführung zur Durchführung der Schritte auf.

Die Steuerung umfasst bevorzugt einen Mikrocontroller und ein auf einem nichtflüchtigen Speicher abgespeichertes Softwareprogramm für die Steuerung einer Verzahnmaschine mit Befehlen, welche ein Verfahren, wie es oben beschrieben wurde, auf der Verzahnmaschine durchführen, wenn sie auf dem Mikrocontroller ablaufen. Die Steuerung steht bevorzugt in Kommunikationsverbindung mit dem Sensor und den Bewegungsachsen der Verzahnmaschine und steuert die Bewegungsachsen der Verzahnmaschine an und wertet die Signale des Sensors aus.

Die vorliegende Erfindung umfasst weiterhin ein Softwareprogramm für die Steuerung einer Verzahnmaschine mit Befehlen, welche ein Verfahren, wie es oben beschrieben wurde, auf der Verzahnmaschine durchführen, wenn sie auf der Steuerung ablaufen.

Insbesondere führt die Verzahnmaschine unter Ansteuerung durch das Softwareprogramm die einzelnen Schritte des Verfahrens automatisch durch und/oder weist eine Bedienerführung zur Durchführung der Schritte auf.

Die vorliegende Erfindung wird nun anhand von Ausführungsbeispielen und Zeichnungen näher erläutert.

Dabei zeigen:
- Fig. 1: ein Ausführungsbeispiel einer erfindungsgemäßen Verzahnmaschine,
- Fig. 2: ein Ausführungsbeispiel für einen in einer Verzahnmaschine eingesetzten Bearbeitungskopf mit einem Sensor,
- Fig. 3: eine Prinzipdarstellung eines Ausführungsbeispiels des erfindungsgemäßen Verfahrens, wobei die Kreisbahn dargestellt ist, auf der der Berührpunkt zwischen Messtasterspitze und Zahnflanke bei Drehung der Werkstückdrehachse und synchronem Verfahren des Messtasters verlaufen soll,
- Fig. 4:: eine perspektivische Darstellung eines Werkstücks, in welcher die Vermessung der Verzahnung des Werkstücks in drei unterschiedlichen Werkstückbreitenpositionen dargestellt ist,
- Fig. 5:: eine Prinzipdarstellung des berechneten Berührpunkts (41, 41') und des tatsächlichen Verlaufs des Berührpunkts bei vorhandenem Positionsfehler (43, 43') der Messtasterspitze mit der Zahnflanke bei zwei unterschiedlichen Werkstückbreitenpositionen,
- Fig. 6:: eine Prinzipdarstellung der Relativposition zwischen einer Flanke der Verzahnung und dem Sensor bei einer gegenüber der Drehachse C1 der Werkstückaufnahme verkippten ersten linearen Bewegungsachse Z der Verzahnmaschine und der sich jeweils an einer Werkstückbreitenposition Z ergebenden ersten und/oder /zweiten Kalibrierwerte dV (bzw. dY), und
- Fig. 7:: eine Tabelle mit ersten und zweiten Kalibrierwerten, welche an drei unterschiedlichen Werkstückbreitenpositionen ermittelt wurden, und zwei Diagramme, welche die Bestimmung der dritten Kalibrierwerte aus den ersten und zweiten Kalibrierwerten zeigen.

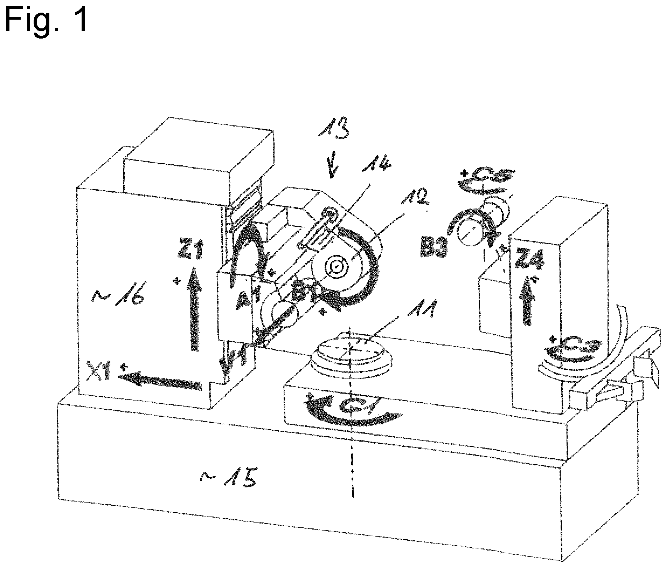

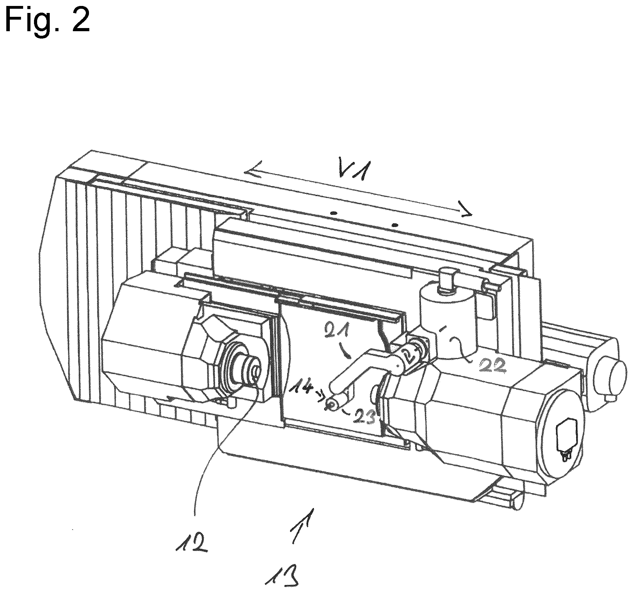

Ein Ausführungsbeispiel für den Aufbau und die Funktionsweise einer erfindungsgemäßen Verzahnmaschine ist in Fig. 1 gezeigt. Fig. 2 zeigt ein Ausführungsbeispiel für einen in der Verzahnmaschine einsetzbaren Bearbeitungskopf 13 mit einem Messtaster 14.

Die Verzahnmaschine umfasst im Ausführungsbeispiel eine Werkstückaufnahme 11 und eine Werkzeugaufnahme 12. Die Werkstück- und Werkzeugaufnahmen sind über entsprechende Antriebe um ihre Drehachsen C2 bzw. B1 antreibbar.

Die Werkzeugaufnahme ist an einem Bearbeitungskopf 13 angeordnet, welcher über Bewegungsachsen relativ zur Werkstückaufnahme verfahrbar ist. Im Ausführungsbeispiel ist eine erste Linearachse Z1 vorgesehen, über welche die Werkzeugaufnahme 12 in einer Richtung, welche bei perfekter Kalibrierung parallel zur Drehachse C1 der Werkstückaufnahme verläuft, verfahrbar ist. Weiterhin ist eine zweite Linearachse X1 vorgesehen, über welche die Werkzeugaufnahme 12 in einer Richtung, welche senkrecht auf der Drehachse C1 der Werkstückaufnahme steht, verfahrbar ist, um den Achsabstand zu verändern. Weiterhin ist eine dritte Linearachse V1 vorgesehen, über welche die Werkzeugaufnahme 12 in einer Richtung parallel zu ihrer eigenen Drehachse B1 verfahrbar ist. Die Ausrichtung der der Linearachse V1 und der Werkzeugaufnahme 12 kann über eine Schwenkachse A1 verändert werden, welche parallel zur X1-Achse verläuft.

Die Werkstückaufnahme 11 ist im Ausführungsbeispiel auf einem Werkzeugtisch 15 angeordnet. Das Maschinenbett 15 trägt einen Werkzeugständer 16, welcher mittels der X1-Achse linear verfahrbar ist. An dem Werkzeugständer ist ein über die Achse Z1 verfahrbarer Schlitten angeordnet, an welchem über die A1-Achse und die V1-Achse der Bearbeitungskopf mit der Werkzeugaufnahme 12 angeordnet ist.

Bei der Verzahnmaschine kann es sich beispielsweise um eine Wälzfräsmaschine und/oder Wälzschleifmaschine handeln. Die vorliegende Erfindung ist jedoch auch für beliebige andere Verzahnmaschinen einsetzbar.

Fig. 2 zeigt ein Ausführungsbeispiel für den Bearbeitungskopf 13. An diesem ist als Sensor ein Messtaster 14 angeordnet. Dieser weist eine Messtasterbasis 23 auf, wobei die Auslenkung einer Messtasterspitze des Messtasters 14 relativ zur Messtasterbasis 23 über mindestens einen Sensor bestimmbar ist.

Der Messtaster 14 ist über die Messtasterbasis 23 an einem Schwenkarm 21 angeordnet, welcher über einen Antrieb 22 aus einer Ruheposition in eine Messposition und zurück verschwenkbar ist.

Die im Rahmen der vorliegenden Beschreibung gewählte Definition der Richtungen X, Y und Z kann auch der Figur 1 entnommen werden, wobei Z orthogonal zu X und Y steht, sodass die drei Achsen ein Rechtssystem bilden. Die Z-Achse verläuft bei perfekter Kalibrierung parallel zu der Drehachse der Verzahnung (Werkstückdrehachse). Die C1-Achse der Maschine bezeichnet hier eine Drehachse der Werkstückaufnahme, welche das Werkstück um die Werkstückdrehachse dreht. Die X-, Y- und Z-Achsen bezeichnen Maschineachsen, die den Messtaster relativ zur Verzahnung in den Richtungen X, Y und Z verfahren. Dabei müssen die Achsen nicht notwendigerweise physikalische Achsen sein. So können die Bewegungen auch durch Interpolation zweier oder mehrere Achsen realisiert werden.

Insbesondere kann eine Bewegung in X-Richtung im Ausführungsbeispiel über die X1-Richtung realisiert werden, eine Bewegung in Y-Richtung im Ausführungsbeispiel bei einer Stellung der A1-Achse, in welcher die V1-Achse parallel zur Y-Richtung ist, über die V1-Achse allein, und in anderen Stellungen durch eine Überlagerung von Bewegungen der V1-Achse und der Z1-Achse. In alternativen Ausgestaltungen der Verzahnmaschine kann jedoch auch eine Y1-Achse vorgesehen sein, welche immer parallel zur Y-Richtung ausgerichtet ist, bspw. indem die Y1-Achse die A1-Achse trägt und durch diese daher nicht verschwenkt wird.

Die Messtasterspitze 1 am Ende des Taststifts 2 des Messtasters 14 ist vorzugsweise eine Kugel (Messtasterkugel), bspw. eine Rubinkugel.

Die vorliegende Erfindung kann jedoch auch für andere Ausgestaltungen der Verzahnmaschine oder des Sensors eingesetzt werden.

Beim Ermitteln der ersten und zweiten Kalibrierwerte (Taster an Werkstück) wird jeweils die Relativlage zwischen dem Werkstück und dem Bearbeitungskopf in einer Ebene senkrecht zur Drehachse C1 der Werkstückaufnahme ermittelt. Der Messtaster zum Kalibrieren ist wie oben dargestellt an derselben Stelle/Achse montiert, an der auch das Bearbeitungswerkzeug montiert wäre. Das ermittelte Ergebnis kann mit einer Soll-Lage verglichen werden und daraus entsteht eine Kalibrierwert bspw. in Form eines Offsets (in x- und y-/v-Richtung), den man auf die Ist-Lage aufaddieren kann. Hierdurch stimmt die angesteuerte Position mit der Soll-Lage auf der Maschine überein, was sowohl beim Bearbeiten als auch bei einer Messung/Verzahnungsprüfung in der Maschine einsetzbar ist.

Eine solche Kalibrierung findet gemäß dem Stand der Technik nur an einer Position in Werkstückbreite statt. Wenn nun aber die Z1-Achse, die C1-Achse (oder beide) nicht senkrecht auf der X-Richtung bzw. Y-Richtung stehen, sondern in eine (unterschiedliche) Richtung geneigt und daher nicht mehr parallel sind, ändert sich die Relativlage zwischen Werkstück und Werkzeug/Taster über die Werkstückbreite.

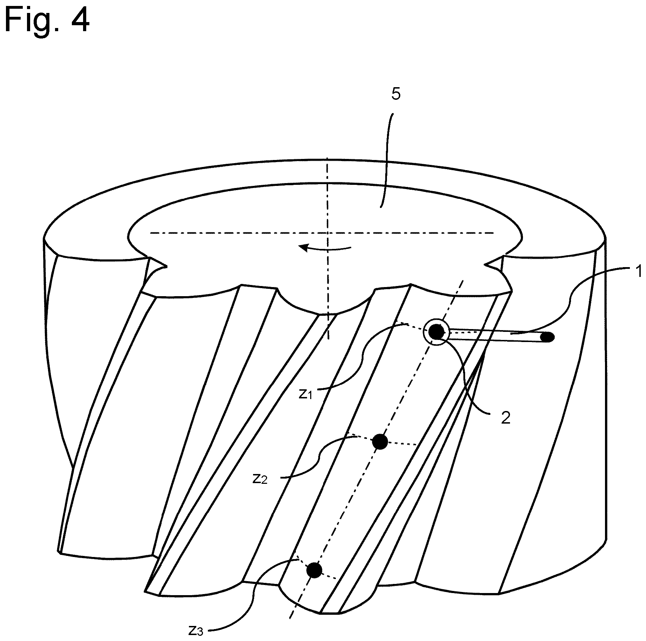

Wenn man nun an mindestens zwei unterschiedlichen Werkstückbreitenpositionen z₁ und z₂ kalibriert, bekommt man unterschiedliche erste und zweite Kalibrationswerte (in x- und y-/v-Richtung) für die unterschiedlichen ersten und zweiten Werkstückbreitenpositionen z₁ und z₂. Die Vermessung und Bestimmung von Kalibrationswerten kann auch an mehr als zwei Werkstückbreitenpositionen erfolgen, um die Genauigkeit zu erhöhen. In Fig. 4 ist hierbei das Vermessen der Verzahnung des Werkstücks 5 an drei unterschiedlichen Werkstückbreitenpositionen z₁ bis z₃ gezeigt.

Aus den mindestens zwei Kalibrationswerten für unterschiedlichen Werkstückbreitenpositionen kann dann erfindungsgemäß ein dritter Kalibrationswert für die Schiefstellung zwischen der C1-Achse und der Z1-Achse bestimmt werden.

Erfindungsgemäß erfolgt damit ein Kalibrieren an unterschiedlichen Werkstückbreitenpositionen an der Verzahnung eines Werkstücks, um aus den hierbei ermittelten Kalibrationswerten die Schiefstellung zwischen der C1-Achse und der Z1-Achse zu bestimmen.

Bevorzugt wird das Werkstück zur Bereitstellung der Verzahnung vor der Bestimmung der Kalibrationswerte auf der Maschine bearbeitet. Dadurch ist garantiert, dass die Drehachse des Werkstücks mit der Drehachse C1 der Werkstückaufnahme übereinstimmt. Dieses Vorgehen führt zudem dazu, dass die Achsschiefstellungen zwischen der Z1- und der C1-Achse der Maschine auch im Werkstück ankommen. Bei Schiefstellungen in X-Richtung wird das Werkstück konisch, bei Schiefstellungen in V-Richtung ändert sich (für kleine Winkel) in Annäherung die Steigungshöhe.

Das erfindungsgemäße Verfahren kann jedoch auch für Werkstücke eingesetzt werden, welche auf einer anderen Maschine oder in einer anderen Aufspannung bearbeitet wurden, da es für die Durchführung des erfindungsgemäßen Verfahrens weder auf den exakten Rundlauf des Werkstücks, noch darauf ankommt, dass sich die Schiefstellungen zwischen Z1- und C1-Achse im Werkstück niedergeschlagen haben. Vielmehr wird bei der Ermittlung der ersten und zweiten Kalibrierwerte jeweils der Abstand des Sensors und damit der Z1-Achse von der C1-Achse der Maschine bestimmt und damit eine Kalibration zwischen den Maschinenachsen vorgenommen, für welche Aufspannfehler des Werkstücks jedenfalls dann nur geringfügige Auswirkungen haben, wenn die Kalibration so vorgenommen wird, wie dies im Folgenden ausführlich beschrieben wird.

Wenn man hierbei an einem Werkstück an zwei Werkstückbreitenpositionen kalibriert, um die Achsschiefstellung zwischen Z1- und C1-Achse zu ermitteln, ist es für das Kalibier-Ergebnis ebenfalls irrelevant, ob eine leicht schiefe Z1-Achse oder eine leicht schiefe C1-Achse (oder beides) vorliegt, da sich allenfalls minimale Unterschiede ergeben.

Gemäß einer möglichen Ausgestaltung der vorliegenden Erfindung kann die Bestimmung der ersten und zweiten Kalibrierwerte (in x- und y-/v-Richtung) an den beiden Werkstückbreitenposition z₁ bzw. z₂ beispielsweise wie folgt durchgeführt werden:
Der Bearbeitungskopf wird über die Z1-Achse so verfahren, dass sich der Messtaster an der ersten bzw. zweiten Werkstückbreitenposition z₁ bzw. z₂ befindet.

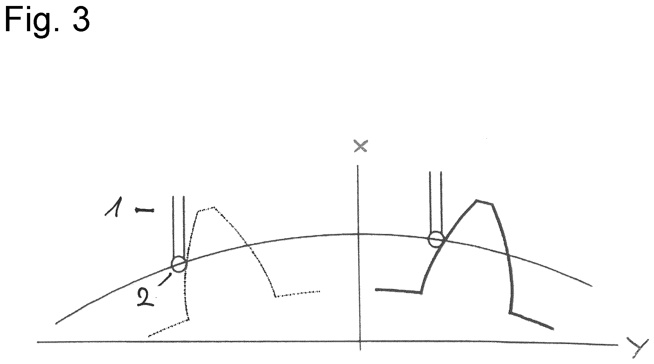

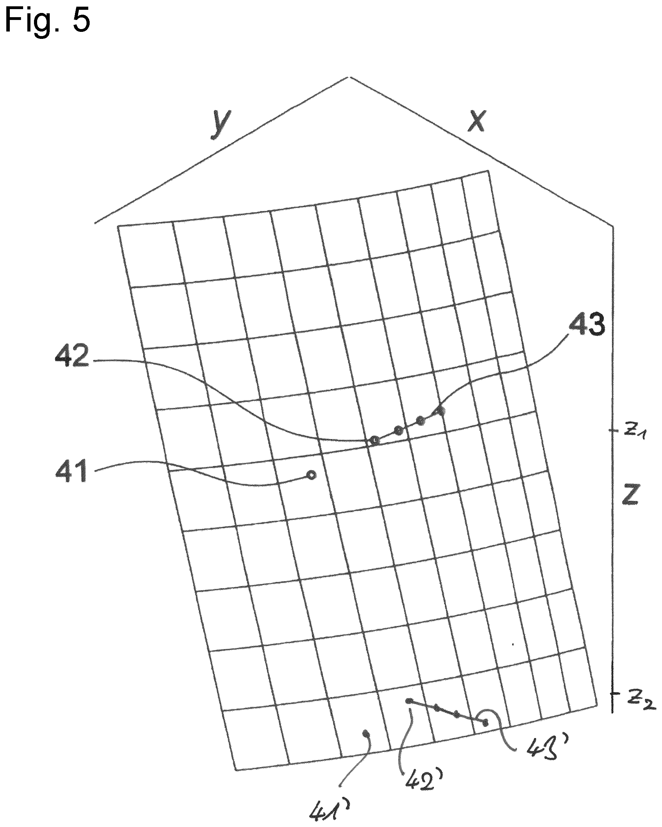

Dann dreht man die C1-Achse und damit das Werkstück, bis der Taststift die gewünschte Auslenkung erreicht, also vorzugsweise so, dass er die Hälfte der möglichen Auslenkung erreicht hat. Diese Situation ist in Figur 3 rechts gezeigt.
- Dann dreht man die C1-Achse kontinuierlich und verfährt die X- und Y-Achse synchron so, dass falls perfekt kalibriert wäre, der Berührpunkt der Messtasterspitze auf der Zahnflanke und auch der Betrag der Tasterauslenkung gleichbleibt, siehe Figur 1. Der Berührpunkt zwischen Messtasterspitze und Verzahnung bewegt sich dabei auf einer Kreisbahn, deren Mittelpunkt auf der Drehachse der Verzahnung liegt.
- Während dieser Drehung zeichnet man die Auslenkung des Taststifts über den C1-Drehwinkel an mehreren, insbesondere an möglichst vielen diskreten Punkten auf.
- Diesen Vorgang wiederholt man für die andere Flankenseite, so dass man eine Auslenkungsaufzeichnung für einen Punkt auf einer linken Flanke und eine Auslenkungsaufzeichnung für einen Punkt auf einer rechten Flanke hat.
- Falls perfekt kalibriert ist und sowohl der Messtaster als auch die Maschinenachsen keine Ungenauigkeiten haben, sind die aufgezeichneten Auslenkungen des Tasters für alle C1-Positionen für die beiden Flanken je konstant bei der jeweiligen Start-Tasterauslenkung. Der Berührpunkt der Messtasterspitze mit den beiden Flanken bleibt dabei unverändert.
- Falls nicht perfekt kalibriert ist, entspricht wie in Fig. 5 gezeigt der tatsächliche Berührpunkt der Messtasterspitze auf der Flanke zu Beginn der Messung (42, 42') nicht dem berechneten Berührpunkt (41, 41'). Dadurch wird der berechnete C1-Winkel, der am Beginn der Messung angenommen wurde, wenn die gewünschte Auslenkung des Taststifts erreicht wird, nicht exakt erreicht. Außerdem verändern sich beim Verfahren der berechneten Kinematikbahnen (43, 43') die Auslenkung des Taststifts und der Berührpunkt auf der Flanke. Wenn man die Auslenkung des Taststifts über die C1-Position aufträgt, erhält man je eine Kurve für beide Flanken.
- Aus diesen können ersten bzw. zweite Kalibrierwerte für die X-Position und die Y-Position des Bearbeitungskopfes relativ zur Drehachse C1 für die jeweils eingenommene erste oder zweite Z-Position z₁ bzw. z₂ bestimmt werden.

Die Bestimmung kann insbesondere jeweils so erfolgen, wie dies aus der DE 10 2019 104 891 A1 bekannt ist, wobei auch die dort beschriebene Alternative zu dem soeben beschriebenen Vorgehen eingesetzt werden kann. Weiterhin alternativ können die ersten bzw. zweiten Kalibrierwerte für die X-Position und die Y-Position des Bearbeitungskopfes relativ zur Drehachse C1 für die erste oder zweite Z-Position z1 bzw. z2 auch so bestimmt werden, wie dies aus der EP 2 554 938 B1 bekannt ist.

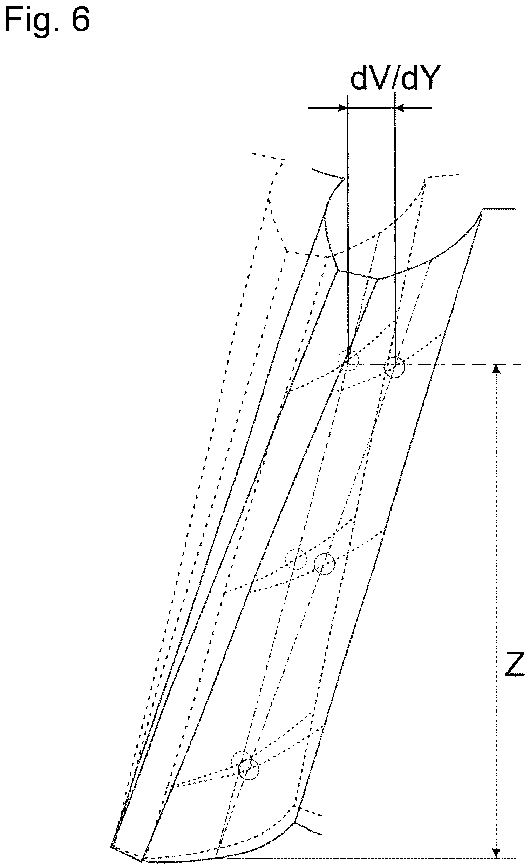

Jedenfalls erhält man durch das Kalibrieren an unterschiedlichen Werkstückbreitenpositionen für diese unterschiedlichen Werkstückbreitenpositionen jeweils eine x- und eine y- Korrektur aus der Kalibration, welche in Fig. 6 für die y-Korrektur als dV/dY eingezeichnet ist. Dadurch erhält man für unterschiedliche Werkstückbreitenpositionen Informationen zur Relativstellung zwischen C1- (Werkstückaufnahme-) Drehachse und Z1-Achse der Verzahnmaschine.

Bei dem Beispiel in Fig. 4, 6 und 7 wurde hierbei an drei unterschiedlichen Werkstückbreitenpositionen bzw. z-Positionen kalibriert und hierfür jeweils Kalibrierwerte für die X1-Achse bzw. die V1/Y1-Achse bestimmt.

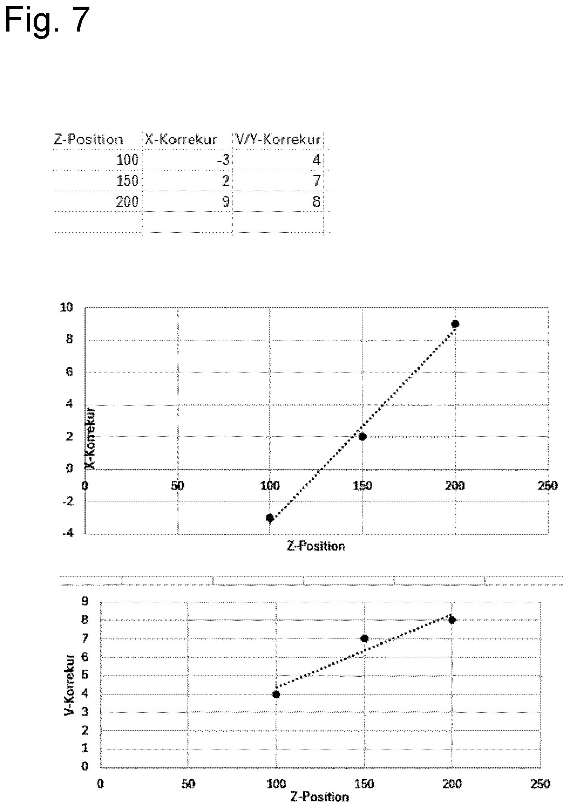

Durch diese Kalibrierwerte kann jeweils eine Ausgleichsgerade gelegt werden, wie dies beispielhaft in Fig. 7 dargestellt ist. Hierbei sind die dicken Punkte die Kalibrierwerte an den Messpunkten, die gestrichelte Linie ist eine Ausgleichsgerade/Trendlinie.

Die Steigung der Ausgleichsgerade stellt damit jeweils einen dritten Kalibrierwert dar, welcher die Schiefstellung der C1- und Z1-Achse zueinander beschreibt und zu deren Ausgleich einsetzbar ist.

Die Ausgleichsgerade kann nun auf den gesamten Z-Verfahrbereich der Maschine linear extrapoliert werden, so dass sich Kompensationskurven ergeben.

In einer ersten Variante kann zur Korrektur der Schiefstellung sowohl bei der Bearbeitung als auch beim Messen/Prüfen in der Maschine beim Verfahren der Z-Achse abhängig von der Z-Position die X1 und die V1/Y1-Achse entlang der Kompensationskurven mitverfahren werden.

Verfährt man die Z1-Achse bespielsweise von Position 110 auf die Position 140 in Fig. 7, ohne hierbei die Relativposition in X1- und V1/Y1-Richtung verändern zu wollen, verändert die Maschine automatisch (entlang der Kompensationskurve) beim Verfahren die X1-Position um +3 und die V1-Position um +1.

Hierdurch kann erreicht werden, dass ein Bearbeitungswerkzeug/ ein Messtaster exakt parallel zu C1 in Z1 verfahren werden kann. Somit ergeben sich weder beim Bearbeiten noch beim Messen ein Fehler durch Achsschiefstellungen.

In einer Endausbaustufe ist daher nur noch nötig, die Kompensationskurve aus den Kalibrationsergebnissen zu berechnen und die Maschine entsprechend anzusteuern.

Falls man keine Kompensationskurven fahren kann oder will, bei welchen X1 und V1 abhängig von Z1 zusätzlich entlang der Kompensationskurven verfahren werden, bspw. da dies in der Maschinensteuerung nicht unmittelbar implementierbar ist, besteht eine weitere Möglichkeit darin, aus der Steigung der Kompensationskurve einen Offset auf den Flankenlinienwinkel für je die rechte und linke Flanke für eine Flankenlinienmessung in der Maschine zu errechnen. Wenn nun mit dem Messtaster eine Flankenline misst, muss dieser Offset auf das fHbeta der Rechten und linken Flanke aufgerechnet werden. Ebenso könnte man für das Bearbeitungsverfahren Offsets für die Vorgabe der fHbeta Modifikation berechnen, so dass dies die Achsschiefstellungen ausgleicht. Die Offsets für die Messung hängen von der X-Position des Messtasters bei der Flankenlinienmessung ab und die Offsets für die Bearbeitung hängen vom Bearbeitungsverfahren ab. Sie sind also nicht zwangsläufig gleich.

Falls die Genauigkeit weiter erhöht werden soll, weil man z.B. die Konizität des Werkstücks durch eine Achsschiefstellung in X-Richtung nicht genau genug berücksichtigt, wäre es denkbar, eine deutlich kompliziertere Berechnung durchzuführen. Bei dem oben beschriebenen Vorgehen geht in die Auswertungsberechnung des Kalibrierens lediglich die Kalibrierung in einer Profilhöhe auf der rechten und linken Flanke ein, woraus eine X und eine V Korrektur berechnet wird. In einer erweiterten Rechnung/Auswertung könnten Kalibriermessungen an unterschiedlichen Profilhöhen eingehen.

Gemäß diesem Vorgehen kann daher beispielsweise durch
- eine erste Kalibrierung mit dem Kontaktpunkt am SAP und
- einer zweiten Kalibrierung mit dem Kontaktpunkt am EAP
der mechanische Fehler beim Abfahren des gesamten Profils (bei einer Kalibrierung des Tasters zwischen SAP und EAP) ermittelt und weitestgehend eliminiert werden.

Entscheidend für die vorliegende Erfindung ist jedoch die Kalibrierung über die Werkstückbreite, zu welcher im Folgenden noch weitere Ausgestaltungen der vorliegenden Erfindung dargestellt werden.

Bei der Messung der Flankenlinie besteht wie oben dargestellt das grundsätzliche Problem, dass die Achsparallelität der Hub-Achse Z1 zur Werkstückaufnahmeachse C1 bisher nur im Rahmen einer Inbetriebnahme vermessen und gegeben falls kompensiert wird.

Die vorliegende Erfindung nimmt daher beispielsweise
- eine erste Kalibrierung im oberen Flankenlinienbereich (z.B. 10 % der Werkstückbreite) und
- einer zweiten Kalibrierung im unteren Flankenlinienbereich (z.B. 90 % der Werkstückbreite)
durchzuführen und so den mechanischen Fehler beim Abfahren der gesamten Flankenlinie (mit Kalibrierung bei z.B. 50%) zu ermitteln und weitestgehend zu eliminieren.

Hierbei wird durch die jeweiligen Kalibrierungen jeweils einen Offset in X und Y des Messtasters ermittelt - absolut gegenüber der Werkstückdrehachse C1.

Durch die Durchführung der Kalibrierungen an unterschiedlichen Verzahnungsbreitenpositionen, bspw. in der Nähe der beiden Stirnflächen, so kann die mechatronische Ungenauigkeit vom obersten zum untersten Punkt der Flankenlinien Messung ermittelt werden und damit der mechatronisch ,ungenau' gemessenen f_H-Beta korrigiert werden.

Damit ist es möglich, die Werkstück-Prüfungen auf einer Produktionsmaschine näher an die Genauigkeit einer Messmaschine heranzubringen, da mit den zusätzlichen Kalibrierungen vor der eigentlichen Messung der aktuelle geometrische Zustand der Maschine (der insbesondere sich durch thermische Effekte ändern kann) erfasst wird.

Insbesondere für die Flankenlinienwinkel-Messung können sich so neue für eine Produktionsmaschine bisher nicht denkbare Genauigkeiten ergeben, da die Achslagenabhängigkeit von Hub-Achse Z1 zu Werkstückaufnahmeachse C1 weitgehendst aufgehoben wird.

Für die Kalibrierung kann das sich gerade im Arbeitsraum befindliche Zahnrad verwendet werden:
- vor der Bearbeitung
- während der Bearbeitung (zwischen Bearbeitung Rundgängen)
- nach der Bearbeitung.
Damit kann die Parallelität der Hubachse Z1 (oder der Position des Tasters) zur Tischdrehachse C1 erfasst werden, um
- die Vorgabe für die Kinematik vor Beginn der Bearbeitung zu korrigieren
- die Vorgabe für die Kinematik während der Bearbeitung zu korrigieren
- die Messung nach der Bearbeitung zu korrigieren (im Vorhinein, im Nachhinein).

Die Verzahnbearbeitung ist vorzugsweise eine Hartfeinbearbeitung, für die entsprechende Genauigkeitsanforderungen bestehen, kann aber auch eine Bearbeitung durch andere Verfahren wie Fräsen, Wälzschälen oder Stoßen sein.

Aus den f_H_beta-Kalibrierungen kann in Zusammenhang mit Temperaturmessungen oder anderen Korrekturmessungen (AMC) das Verhalten der Bearbeitungsmaschine besser verstanden bzw. vorherbestimmt werden. Eine entsprechende Verifikation wäre nach der Bearbeitung auch möglich.

Einschub: AMC= Automatische X-Korrektur nach Messung mit einem Messtaster am Werkstück oder einer Messfläche am Gegenhalter
Für eine Kontrollkalibrierung während der Bearbeitung ist entscheidend, dass der thermische (geometrische) Schaden der durch die Unterbrechung des Bearbeitungsprozesses entsteht nicht größer ist, als der vermeintliche Genauigkeitsgewinn durch die Kalibrierung. Auch dieser Einfluss könnte gegebenenfalls durch kontinuierliches Lernen in diversen Bearbeitungsprozessen besser abgeschätzt und vorbestimmt werden.

Dem Kalibrierverfahren liegt jeweils zu Grunde, dass das Werkstück gedreht wird: die Drehposition kann mit den üblicherweise verbauten Gebern hochgenau erfasst werden. Die gilt ebenso für den Fall einer Schrägverzahnung, bei der in Abhängigkeit von der Hubposition eine Verdrehung des Werkstücks überlagert werden muss. Die tatsächliche Position des Tasters relativ zur Tischachse ist die Summe aus thermischen und mechatronischen Abweichungen der beteiligten Achsen und Komponenten: gegebenfalls kann durch unterschiedliche Kinematik beim Kalibrieren auf unterschiedlich starke Einflüsse von beteiligten Achsen und Komponenten geschlossen werden (z.B. reine tangentiale Bewegung durch V1 in Kombination mit C1 im Vergleich zu einer kombinatorischen Bewegung aus V1 und X1 und C1.

Ist es möglich, die Position des Tasters relativ zur Tischachse zu bestimmen, so können damit andere, weitere Kalibriermessungen wie z.B. AMC am Gegenhalter neu interpretiert werden, da damit eine Verlagerung der Gegenhalters relativ zur Tischachse ermittelt werden kann. Übersteigt diese z.B. bei einer Kontrollkalibrierung während der Bearbeitung zulässige Grenzwerte, kann der Prozess unterbrochen werden um die Gegenhalterspitze neu auszurichten. Damit könnte Ausschuss verhindert werden, allerdings natürlich mit dem Risiko, dass der thermische (geometrische) Schaden der durch die Unterbrechung des Bearbeitungsprozesses entsteht, nicht noch größer ist als der vermeintliche Genauigkeitsgewinn durch die Kalibrierung / Nachjustage.

## Patentansprüche

1. Verfahren zum Kalibrieren einer Verzahnmaschine, welche eine um eine erste Drehachse C1 drehbare Werkstückaufnahme, einen Bearbeitungskopf mit einer Werkzeugaufnahme, und einen Sensor zum Vermessen eines in der Werkstückaufnahme der Verzahnmaschine aufgenommenen Werkstücks aufweist, wobei der Sensor an dem Bearbeitungskopf der Verzahnmaschine angeordnet ist, wobei der Bearbeitungskopf über eine erste lineare Bewegungsachse Z der Verzahnmaschine relativ zur Werkstückaufnahme in Werkstückbreitenrichtung verfahrbar ist,
wobei das Verfahren folgende Schritte umfasst:
- Ermitteln mindestens eines ersten Kalibrierwerts durch Vermessen einer Verzahnung des Werkstücks an einer ersten Werkstückbreitenposition,
- Ermitteln mindestens eines zweiten Kalibrierwerts durch Vermessen einer Verzahnung des Werkstücks an einer zweiten Werkstückbreitenposition, und
- Bestimmen mindestens eines dritten Kalibrierwertes für die relative Ausrichtung der ersten linearen Bewegungsachse Z des Bearbeitungskopfes zur ersten Drehachse C1 der Werkstückaufnahme aus dem mindestens einen ersten und dem mindestens einen zweiten Kalibrierwert.

2. Verfahren nach Anspruch 1, wobei die Verzahnmaschine mindestens eine zweite Linearachse X1 und/oder eine dritte Linearachse V1/Y1 zum Verfahren des Bearbeitungskopfes relativ zur Werkstückaufnahme aufweist, wobei der mindestens eine erste Kalibrierwert und der mindestens eine zweite Kalibrierwert jeweils eine Kalibrierung der Position der zweiten Linearachse X1 und/oder der dritten Linearachse V1/Y1 relativ zur ersten Drehachse C1 betreffen.

3. Verfahren nach einem der vorangegangenen Ansprüche, wobei die Verzahnung vor der Vermessung in der gleichen Aufspannung auf der Verzahnmaschine erzeugt wird, oder wobei die Verzahnung bereits vor dem Aufspannen des Werkstücks in der Verzahnmaschine vorliegt und vor dem Vermessen der Verzahnung keine Bearbeitung der Verzahnung auf der Verzahnmaschine erfolgt.

4. Verfahren nach einem der vorangegangenen Ansprüche, wobei das Ermitteln des mindestens einen ersten und zweiten Kalibrierwerts jeweils durch Ermitteln mindestens einer über den Sensor bestimmten Relativposition zwischen dem Werkstück und dem Bearbeitungskopf an mindestens einem Messpunkt erfolgt und das ermittelte Ergebnis mit einer Soll-Relativposition verglichen wird, um daraus einen Korrekturwert zu bestimmen.

5. Verfahren nach einem der vorangegangenen Ansprüche, wobei das Ermitteln des mindestens einen ersten Kalibrierwerts und des mindestens einen zweiten Kalibrierwerts erfolgt, indem das Werkstück für die Vermessung über die Drehachse C1 der Werkstückaufnahme gedreht und der Sensor über mindestens eine Achse der Verzahnmaschine verfahren wird, um die Verzahnung zu vermessen, wobei bevorzugt der Sensor zur Vermessung des Werkstücks auf mindestens einer vorgegebenen Bahn bezüglich eines Punktes auf der Werkstückoberfläche geführt wird.

6. Verfahren nach Anspruch 5, wobei ein Messpunkt des Sensors in zwei Messdurchläufen entlang zweier unterschiedlicher Bahnen entang der Oberfläche der Verzahnung geführt und der erste bzw. zweite Kalibrierwert aus Abweichungen zwischen den Messergebnissen bestimmt wird.

7. Verfahren nach Anspruch 5, wobei der Sensor so verfahren wird, dass ein Messpunkt auf der Zahnflanke bei perfekter Kalibrierung unverändert bleiben würde, wobei der erste bzw. zweite Kalibrierwert aus Abweichungen zwischen einer bei perfekter Kalibrierung erwarteten Verfahrbewegung des Sensors und/oder eines bei perfekter Kalibrierung erwarteten Sensorwerts und einer tatsächlicheb Verfahrbewegung des Sensors und/oder einem tatsächlichen Sensorwert in die Bestimmung bestimmt werden.

8. Verfahren nach einem der vorangegangenen Ansprüche, wobei es sich bei dem Sensor um einen Messtaster handelt.

9. Verfahren nach einem der vorangegangenen Ansprüche, wobei mindestens der dritte Kalibrierwert bei einer nachfolgenden Messung und/oder Bearbeitung zur Korrektur der Verfahrkinematik des Bearbeitungskopfes und/oder zur Korrektur der Mess- und/oder Ansteuerwerte herangezogen wird.

10. Verfahren nach einem der vorangegangenen Ansprüche, wobei bei einer nachfolgenden Messung und/oder Bearbeitung beim Verfahren des Bearbeitungskopfes entlang der ersten Linearachse Z abhängig von der Position in Werkstückbreiterichtung die zweite Linearachse X und/oder die dritte Linearachse V/Y in Abhängigkeit von dem dritten Kalibrierwert mitverfahren wird.

11. Verfahren nach einem der vorangegangenen Ansprüche, wobei bei einer nachfolgenden Messung und/oder Bearbeitung ein gemessener und/oder der Ansteuerung zugrunde gelegter Soll-Flankenlinienwinkel in Abhängigkeit von dem dritten Kalibrierwert korrigiert wird, insbesondere über einen vom Kalibierwert abhängigen Offset.

12. Verfahren nach einem der vorangegangenen Ansprüche, wobei die Kalibrierung zwischen zwei Bearbeitungsschritten an dem Werkstück erfolgt, oder wobei die Kalibrierung nach der Bearbeitung eines Werkstücks erfolgt.

13. Verfahren nach einem der vorangegangenen Ansprüche, wobei zur Bestimmung des mindestens einen dritten Kalibrierwerts an drei oder mehr Werkstückbreitenposition Kalibrierwerte durch Vermessen des Werkstücks ermittelt werden.

14. Verzahnmaschine, welche eine um eine erste Drehachse C1 drehbare Werkstückaufnahme, einen Bearbeitungskopf mit einer Werkzeugaufnahme, und einen Sensor zum Vermessen eines in der Werkstückaufnahme der Verzahnmaschine aufgenommenen Werkstücks aufweist, wobei der Sensor an dem Bearbeitungskopf der Verzahnmaschine angeordnet ist, wobei der Bearbeitungskopf über eine erste lineare Bewegungsachse Z der Verzahnmaschine relativ zur Werkstückaufnahme in Werkstückbreitenrichtung verfahrbar ist,
wobei die Verzahnmaschine eine Steuerung aufweist, welche eingerichtet und/oder programmiert ist, ein Verfahren nach einem der Ansprüche 1 bis 13 auf der Verzahnmaschine durchzuführen,
wobei bevorzugt die Steuerung die einzelnen Schritte des Verfahrens automatisch durchführt und/oder eine Bedienerführung zur Durchführung der Schritte aufweist.

15. Softwareprogramm für die Steuerung einer Verzahnmaschine mit Befehlen, welche ein Verfahren nach einem der Ansprüche 1 bis 13 auf der Verzahnmaschine durchführen, wenn sie auf der Steuerung ablaufen,
wobei bevorzugt die Verzahnmaschine unter Ansteuerung durch das Softwareprogramm die einzelnen Schritte des Verfahrens automatisch durchführt und/oder eine Bedienerführung zur Durchführung der Schritte aufweist.
